# EUROPÄISCHE PATENTANMELDUNG

(11) **EP 3 787 223 A1**
(43) Veröffentlichungstag der Anmeldung: **03.03.2021**
(21) Anmeldenummer: 20192775.3
(22) Anmeldetag: 25.08.2020
(51) Int. Cl.: H04L 9/08, H04L 9/16

(54) **VERFAHREN UND VORRICHTUNG ZUR ERZEUGUNG VON KRYPTOGRAPHISCHEN SCHLÜSSELN NACH EINEM SCHLÜSSELABLEITUNGSMODELL SOWIE FAHRZEUG**

(30) Priorität: 28.08.2019 DE 102019212958
(71) Anmelder: VOLKSWAGEN AG, 38440 Wolfsburg (DE)
(72) Erfinder: Tschache, Alexander, 38436 Wolfsburg (DE); Winkelvos, Timo, 38173 Sickte (DE)

(57) **Zusammenfassung**

Die Erfindung betrifft in einer Ausgestaltung ein Verfahren zur Erzeugung von kryptographischen Schlüsseln nach einem Schlüsselableitungsmodell.

Darin sind die Schritte vorgesehen:
- Definieren eines Masterschlüssels (MK) für verschiedene Modelle eines Produkttyps eines Herstellers,
- Definieren eines Satzes von Schlüsselableitungsparametern (MKR, IDC, KID, KIDUC, KIDUR, VIN, ECUIN) für das Schlüsselableitungsmodell,
- Erfassen der Schlüsselableitungsparameter (MKR, IDC, KID, KIDUC, KIDUR, VIN, ECUIN) für das Modell, zu dem ein kryptographischer Schlüssel (CCK, ECUIK, ECUGK) abgeleitet werden soll,
- Ableiten eines einzelnen oder eines Satzes kryptographischer Schlüssel (CCK, ECUIK, ECUGK) von dem Masterschlüssel (MK) nach dem Schlüsselableitungsmodell unter Einbeziehung der Schlüsselableitungsparameter (MKR, IDC, KID, KIDUC, KIDUR, VIN, ECUIN), dadurch gekennzeichnet, dass
- der Schritt des Definierens eines Satzes von Schlüsselableitungsparametern wenigstens die Parameter
- Schlüsseltyp-Identifikation (KID)
- Schlüsseltyp-Anlernzähler (KIDUC)

umfasst.

## Beschreibung

Die Erfindung betrifft ein Verfahren und eine Vorrichtung zur Erzeugung von kryptographischen Schlüsseln nach einem Schlüsselableitungsmodell sowie ein entsprechend ausgestattetes Fahrzeug.

Die Erfindung betrifft das Gebiet der Datensicherheit im digitalen Zeitalter. Aus dem technischen Gebiet der Kryptographie sind diverse Techniken zur Verschlüsselung und zum sicheren Austausch von Daten bekannt. Die Hauptziele zum Schutz von Datenbeständen sind Vertraulichkeit (Zugriffsschutz), Integrität (Änderungsschutz), Authentizität/Fälschungsschutz und Verbindlichkeit (Nichtabstreitbarkeit). Die Erfindung wird am Beispiel eines generischen Schlüsselbereitstellungssystems erläutert. Die Schlüssel, die bereitgestellt werden, betreffen kryptographische Schlüssel.

Es gibt die folgenden Anforderungen eines generischen Schlüsselbereitstellungssystems: Zunächst soll es ermöglicht werden, dass nicht alle Schlüssel einzeln gespeichert werden müssen. Daneben gibt es die Anforderung der Einmaligkeit von Schlüsseln. Die Schlüssel sollen sich zwischen den Fahrzeugen, aber auch zwischen den Steuergeräten und/oder Steuergerätegruppen unterscheiden. Schlüssel unterschiedlicher Funktionen sollen sich auch komplett unterscheiden. Eine Änderung der Schlüssel soll effektiv möglich sein, wobei die neuen Schlüssel auch komplett unterscheidbar sein müssen.

Dabei gibt es den Ansatz, vollständig auf asymmetrische Kryptographie zu setzen und asymmetrische Schlüssel zu verwenden. Dieser Ansatz hat aber einige Nachteile:
Er führt zu einer wachsenden Schlüsseldatenbank (zur Nachverfolgung) mit entsprechenden Vertraulichkeitsanforderungen. Die wachsende Schlüsseldatenbank ergibt sich, wenn man die Schlüssel einfach normal als Zufallszahlen erzeugt (der Standardweg). Da man deswegen möglichst wenig Schlüssel erzeugen möchte, muss man die Schlüsselanzahl (entweder über Anzahl der Schlüssel oder weniger Updates der Schlüssel) reduzieren, was die Flexibilität reduziert.

Es gibt keine einfache Möglichkeit, Versionen von Schlüsselmengen des Fahrzeugs zu erzeugen oder nachzuvollziehen. Asymmetrische Kryptographie ist außerdem langsam, teuer, speicheraufwändig und führt zu enormer Komplexität in der Produktion und der späteren Wartung.

Bei symmetrischer Kryptographie besteht aber das Problem, dass die gleichen Schlüssel auch dem jeweiligen Backend-Server bekannt gegeben werden müssen, von denen z.B. auch die Händler und Werkstätten die Schlüssel beziehen müssen, wenn es erforderlich wird. Dies wird z.B. dann erforderlich, wenn das Fahrzeug verkauft wird. Es gibt unterschiedliche Vorschriften in den jeweiligen Ländern, und dies kann dazu führen, dass bei Wechsel des Landes oder der Region eine Neubedatung mit Schlüsseln nötig wird. Es gibt Länder, die die Offenlegung der Schlüssel gegenüber staatlichen Behörden verlangen. Deshalb ist es notwendig, die Schlüssel bei Verkauf in eine andere Region / Land zu erneuern. In Fahrzeugen werden für verschiedene Zwecke Schlüssel benötigt. Dabei geht es nicht nur um das Öffnen und Schließen des Fahrzeuges. Schlüssel werden heute schon steuergeräteindividuell vergeben. Selbst in einem Steuergerät können mehrere Funktionen realisiert sein, die einen eigenen Schlüssel benötigen. Dabei kann derselbe kryptographische Schlüssel auch in mehreren Steuergeräten eingesetzt werden. Dies kann z.B. für die Kommunikation der Steuergeräte untereinander wie auch für die Kommunikation nach außen sinnvoll sein. So können für ein modernes Fahrzeug bereits heute schon ca. 50 verschiedene Schlüssel vorgesehen sein. Dies alles für jedes individuelle Fahrzeug zu speichern, ist mit einem erhöhten Aufwand verbunden. Um dieses Problem zu lösen, wurde das Konzept der Schlüsselableitung entwickelt. Dies sieht vor, dass an die verschiedenen Backend-Server sogenannte Masterschlüssel verteilt werden. Bei dem Backend-Server wird zusätzlich noch zu jedem Fahrzeug gespeichert, welche Schlüsseltypen in welchen Steuergeräten vorhanden sind. Zusätzlich werden fahrzeugindividuelle Merkmale gespeichert. Dies ist erforderlich, damit sich bei der Schlüsselableitung auch fahrzeugindividuelle Schlüssel erzeugen lassen, die sich von Fahrzeug zu Fahrzeug unterscheiden. Es existiert ein generisches fahrzeugunabhängiges Schlüsselerzeugungsverfahren, bei dem die fahrzeugindividuellen Merkmale eingehen. Mit diesen Informationen können die Schlüssel für das individuelle Fahrzeug immer wieder neu generiert werden.

Aus der Patentanmeldung US 2019/0028267 A1 ist ein Schlüsselerzeugungsverfahren bekannt. Das Verfahren nutzt einen Master-Schlüssel und eine Steuergerät-ID, um einen Schlüssel zu erzeugen. Dieser Schlüssel wird zur Authentisierung genutzt. Dabei wird ein Masterschlüssel nur dazu verwendet, eine sichere Einbringung in ein Hardware-Security Modul HSM zu gewährleisten.

Aus der DE 10 2007 058 975 A1 ist ein Bordnetz-System eines Kraftfahrzeugs mit Steuergeräten bekannt, die über einen Datenbus miteinander kommunizieren. Dabei ist vorgesehen, dass vom Master Security Modul erzeugte und mit dem Transportschlüssel verschlüsselte Kommunikationsschlüssel von einem symmetrischen AES-Schlüssel abgeleitet werden, wobei der AES-Schlüssel einen Master-Schlüssel darstellt und für mindestens den überwiegenden Teil der Client Security Module jeweils ein eigener Kommunikationsschlüssel abgeleitet wird. Damit sollen Manipulationen am Bordnetz eines Kraftfahrzeugs, insbesondere an der Software der Steuergeräte des Bordnetzes, unterbunden werden.

Aus der EP 2 629 450 A2 ist ebenfalls ein Schlüsselableitungsverfahren bekannt. Das Schlüsselableitungsverfahren basiert auf dem "Secure Hash Algorithm" SHA-1 bei dem eine Anzahl Schlüssel aus einem Masterschlüssel abgeleitet werden.

Aus der EP 3 157 281 A1 ist ein Verfahren zur geschützten Kommunikation eines Fahrzeuges bekannt. Dabei werden ebenfalls die fahrzeug-individuellen Schlüssel aus einem Masterschlüssel abgeleitet. Dieser Masterschlüssel dient als Ableitungsbasis für alle Schlüssel aller Fahrzeuge oder einer bestimmten Gruppe von Fahrzeugen, wie zum Beispiel einem Modell oder einer Modellreihe des Herstellers. Bei dem beschriebenen Schlüsselableitungsverfahren geht auch die Fahrzeugidentifikationsnummer VIN oder FIN des Vertrauenskreises ein. Die abgeleiteten Schlüssel können dadurch fahrzeugindividuell generiert werden.

Bei den vorbekannten Lösungen besteht das Problem, dass nicht alle Bedingungen, die heute an ein Schlüsselableitungsmodell gestellt werden, erfüllt werden können.

Der Erfindung liegt nun die Aufgabe zugrunde, ein verbessertes Schlüsselmanagementsystem zur Verfügung zu stellen, das die erweiterte Aufgabenliste, die ein Großkonzern mit weltweiten Standorten und Fahrzeugflotten daran stellt, erfüllen kann.
Ein Großkonzern, der Fahrzeuge herstellt und vertreibt, stellt z.B. mehrere oder alle der folgenden Anforderungen an ein Schlüsselmanagementsystem:
- Die Schlüssel der individuellen Fahrzeuge sollen sich unterscheiden.
- Unterschiedlich definierte Schlüsseltypen sollen sich unterscheiden.
- Bei der Schlüsselerneuerung sollen sich die neuen Schlüssel vollkommen von den Vorgängerschlüsseln im gleichen Fahrzeug unterscheiden.
- Auch die neuen Schlüssel, die für Steuergeräte vergeben werden, sollen sich vollkommen von den Vorgängerschlüsseln im gleichen Steuergerät bzw. in dem Steuergeräteverbund unterscheiden.
- Die Schlüssel eines sicheren Kommunikationsverbunds sind gleich (n Steuergeräte können für die Kommunikation untereinander den gleichen Schlüssel einsetzen), dies gilt auch nach der Erneuerung dieser Schlüssel, wobei der neue Schlüssel sich ebenfalls von dem Vorgängerschlüssel unterscheiden soll.
- Durch Auslesen der Metadaten (Schlüsseltyp-Identifizierer und Schlüsseltyp-Anlernzähler) sollen sich selbst bei Kenntnis des Vorgängerschlüssels die aktuellen Schlüssel nicht berechnen lassen, ohne die Elternschlüssel zu kennen.
- Umgekehrt soll es möglich sein, bei Kenntnis des Elternschlüssels und der Metadaten des Fahrzeugs alle Schlüssel wieder herzuleiten, so dass diese nicht im Backend permanent gespeichert werden müssen. Die Metadaten sind selber nicht vertraulich, nur der Masterschlüssel und etwaige Elternschlüssel sind vertraulich, so dass die Datenbank, in der die Metadaten gespeichert sind, keine erhöhten Sicherheitsanforderungen erfüllen muss, z.B. die Notwendigkeit der Anfertigung von Backups.

Diese Aufgabe wird durch ein Verfahren zur Erzeugung von kryptographischen Schlüsseln nach einem Schlüsselableitungsmodell gemäß Anspruch 1, einer Vorrichtung zur Erzeugung von kryptographischen Schlüsseln nach einem Schlüsselableitungsmodell gemäß Anspruch 10 und ein Fahrzeug gemäß Anspruch 12 gelöst.

Die abhängigen Ansprüche beinhalten vorteilhafte Weiterbildungen und Verbesserungen der Erfindung entsprechend der nachfolgenden Beschreibung dieser Maßnahmen.

Die erfindungsgemäße Lösung besteht in einer ersten Variante in einem Verfahren zur Erzeugung von kryptographischen Schlüsseln nach einem Schlüsselableitungsmodell, bei dem die folgenden Schritte ausgeführt werden:
- Definieren eines Masterschlüssels für verschiedene Modelle eines Produkttyps eines Herstellers,
- Definieren eines Satzes von Schlüsselableitungsparametern für das Schlüsselableitungsmodell,
- Erfassen der Schlüsselableitungsparameter für das Modell, zu dem ein kryptographischer Schlüssel abgeleitet werden soll,
- Ableiten eines einzelnen oder eines Satzes kryptographischer Schlüssel von dem Masterschlüssel nach dem Schlüsselableitungsmodell unter Einbeziehung der Schlüsselableitungsparameter, dadurch gekennzeichnet, dass
- der Schritt des Definierens eines Satzes von Schlüsselableitungsparametern wenigstens die Parameter
   - Schlüsseltyp-Identifikation
   - Schlüsseltyp-Anlernzähler
      umfasst.

Der Einsatz des Schlüsselableitungsmodells, nach dem einzelne oder ein ganzer Satz kryptographischer Schlüssel von einem Masterschlüssel abgeleitet werden können, bietet den Vorteil, dass nicht mehr eine große Menge von kryptografischen Schlüsseln, die eben auch sehr vertraulich sind, zu den verschiedenen Stellen, an denen die Schlüssel benötigt werden, verteilt und dort sicher gespeichert werden müssen. Dies kann für einen großen Konzern, der sehr große Stückzahlen von Produkten aufweist, die Reduktion eines immensen Aufwandes bedeuten. Z.B. werden in dem Konzern der Anmelderin 10 Mio Fahrzeuge/a hergestellt. Es werden z.Z. ca. 50 verschiedene Schlüssel in einem Fahrzeug benötigt. Der Trend ist zunehmend und es können zukünftig noch wesentlich mehr Schlüssel benötigt werden. Wenn statt der kryptografischen Schlüssel nur die Masterschlüssel in dem Hersteller-Backend-Servern gespeichert werden müssen, ist dieser Aufwand um ein Vielfaches reduziert. Aus einem Masterschlüssel können auch mehrere verschiedene Schlüssel abgeleitet werden. Es können Masterschlüssel für die verschiedenen Fahrzeugmodelle getrennt nach Marke und Vertriebsland erforderlich werden. Diese Zahl beschränkt sich dann aber auf wenige Dutzend Masterschlüssel. Der Vorteil, dass die Schlüsselableitungsparameter eine Schlüsseltyp-Identifikation und einen Schlüsseltyp-Anlernzähler beinhalten, bietet den Vorteil, dass selbst, wenn es "Hackern" gelingen sollte, durch Auslesen der Metadaten an die Schlüsseltyp-ID und den Schlüsseltyp-Anlernzähler zu kommen, sich selbst bei Kenntnis des Vorgängerschlüssels die aktuellen Schlüssel nicht berechnen lassen, ohne den Masterschlüssel oder einen zwischengegliederten Elternschlüssel zu kennen. Diese werden aber im Fahrzeug gar nicht abgespeichert und sind nur bei dem Backend-Server sicher aufbewahrt. Der Vorgängerschlüssel ist dabei der Schlüssel, der vorher in dem Fahrzeug zu dem entsprechenden Zweck eingesetzt wurde und jetzt erneuert wird. Ein Elternschlüssel kann ein Schlüssel sein, der sich selbst vom Masterschlüssel ableitet, von dem wiederum einer oder mehrere kryptographische Schlüssel abgeleitet werden.

Umgekehrt können bei Kenntnis des Master- oder Elternschlüssels und der Metadaten des Fahrzeugs die Schlüssel wieder hergeleitet werden, so dass diese im Backend-Server nicht permanent sicher gespeichert werden müssen. Es ist sogar so, dass die Metadaten der Schlüssel nicht unbedingt geschützt werden müssen (die Master- und Elternschlüssel hingegen schon!), so dass eine Datenbank mit den Metadaten keine erhöhten Sicherheitsanforderungen, wie z.B. die Notwendigkeit der regelmäßigen Erstellung von Backups, erfüllen muss.

Eine sehr vorteilhafte Erweiterung des Verfahrens besteht darin, dass der Schritt des Definierens eines Satzes von Schlüsselableitungsparametern weiterhin einen oder mehrere der Parameter
- Seriennummer des Produkttyps
- Erneuerungsbedürftigkeit eines oder mehrerer Schlüssel
- Identitätszähler
umfasst. Dabei hat der Identitätszähler die Bedeutung eines Zählers, der für den Schlüsselverbund des Produktes gültig ist. Dabei wird hier angemerkt, dass es sich streng genommen um genau eine Instanz eines Produktes handelt. Theoretisch können in einem Produkt mehrere Instanzen vorgesehen sein, für die jeweils ein eigener Satz an Schlüsselableitungsparametern mit Identitätszähler vorgehalten wird. Durch Erhöhung dieses Identitätszähler um Eins kann erreicht werden, dass alle Schlüssel des Schlüsselverbunds bei der Schlüsselableitung geändert werden. Dies ermöglicht besondere Anwendungsfälle wie:
a) den Import/Export von Produkten in Länder mit anderen rechtlichen Anforderungen an die Kryptographie;
b) bei dem Anwendungsfall, dass es sich bei dem Produkt um ein Fahrzeug handelt, könnte es zukünftig aus Datenschutzgründen erforderlich werden, die Schlüssel bei einem Fahrzeugverkauf zu ändern. Dies lässt sich damit einfach realisieren.

Mit der Einbeziehung der Seriennummer können die abgeleiteten Schlüssel für das verkaufte Produkt individualisiert werden. Handelt es sich bei dem Produkt um ein Fahrzeug, kann z.B. die Fahrzeug-Identifikationsnummer (FIN oder Englisch VIN) dafür genutzt werden.

Interessant ist auch der Parameter "Erneuerungsbedürftigkeit". Dieser kann den Tausch eines Steuergeräts in dem Produkt erleichtern. Es werden dann alle Schlüsseltyp-Anlernzähler der bei den Steuergeräten erneuerungsbedürftig gekennzeichneten Schlüssel erhöht, wodurch bei der Schlüsselableitung für das neue Steuergerät auch diese erneuert werden. Dies hat den Vorteil, dass sich derselbe Schlüssel auch in den anderen Steuergeräten ändert. Dies macht invasive Angriffsszenarien sinnlos, bei denen die Hardware von Steuergeräten zerstört wird, um Schlüssel aus geschützten Speicherbereichen auszulösen, da diese Schlüssel wertlos werden, sobald das Steuergerät ersetzt wird.

Gemäß einer weiteren vorteilhaften Maßnahme wird eine Referenz auf den Masterschlüssel, von dem die kryptographischen Schlüssel abgeleitet werden, in dem Produkt abgespeichert. Diese kann dann in einer Nachricht zu der Stelle übertragen werden, wo die Schlüssel abgeleitet werden.

Das Verfahren kann besonders vorteilhaft eingesetzt werden, wenn es sich bei dem Produkt um ein Fahrzeug handelt. Moderne Fahrzeuge sind mit einer Anzahl von Steuergeräten ausgestattet, die teilweise eigene Schlüssel verwenden. In Fahrzeugen müssen daher viele verschiedene Schlüssel untergebracht werden. Für Fahrzeuge ist es vorteilhaft, wenn als weiterer Schlüsselableitungsparameter der Steuergerätetyp in die Schlüsselableitung eingeht.

Für die Schlüsselverwaltung ist es bei dem Verfahren von Vorteil, wenn die Masterschlüssel für die Fahrzeuge eines Herstellers sich nach einem oder mehreren der Kriterien Fahrzeugmarke, Fahrzeugmodell, Herstellungsjahr und Vertriebsland oder Vertriebsregion unterscheiden. So brauchen nicht alle Schlüsselsätze in jedem Rechenzentrum der verschiedenen Dienstleister verwaltet werden.

Für die Einbringung der abgeleiteten Schlüssel in das Fahrzeug ist es vorteilhaft, wenn nach der Schlüsselableitung in einem Backend-Server eines Krypto-Dienstleisters oder des Herstellers der abgeleitete Schlüssel oder der Satz der abgeleiteten Schlüssel zusammen mit der Masterschlüsselreferenz und dem Stand des Identitätszähler per Download-Link-Container zur Verfügung gestellt wird. Das Produkt kann dann bei Vorliegen von Internet-Konnektivität den Download-Link-Container über eine gesicherte Verbindung herunterladen.

Dabei können für verschiedene Steuergeräte des Produktes separate Download-Link-Container zur Verfügung gestellt werden. Das erhöht die Sicherheit und erleichtert die Behandlung des runtergeladenen Download-Link-Containers im Produkt.

Es ist weiterhin vorteilhaft, wenn die Eigenschaften des Schlüssels und der Ableitungspfad von dem durch die Schlüsseltyp-Identifikation bezeichneten Schlüsseltyp bestimmt wird. Der Ableitungspfad gibt dabei an, von welchem Masterschlüssel welcher zwischengegliederte Elternschlüssel abgeleitet wird und welcher kryptographische Schlüssel wiederum von welchem Elternschlüssel abgeleitet wird.

Bei dem Verfahren wird vorausgesetzt, dass ein sicherer Prozess zur Bedatung der Backendsysteme existiert, der es ermöglicht, Schlüssel in die Backendsysteme einzuspielen, ohne dabei die Vertraulichkeit dieser Schlüssel zu gefährden. Dieser Prozess wird angewandt, um die (Domänen-) Masterschlüssel in die weltweit verteilten Dienstleistungszentren einzuspielen.

Für eine Vorrichtung zur Erzeugung von kryptographischen Schlüsseln ist es dem erfindungsgemäßen Verfahren entsprechend vorteilhaft, wenn die Vorrichtung ein Schlüsselableitungs-Modul beinhaltet, mit dem eine Ableitung des kryptographischen Schlüssels von einem gespeicherten Masterschlüssel, der in einer empfangenen Nachricht durch eine darin angegebene Masterschlüsselreferenz ausgewählt wird, erfolgt, wobei die Schlüsselableitung nach einem Schlüsselableitungsmodell erfolgt, bei dem ein Satz von Schlüsselableitungsparametern eingeht, der wenigstens die Schlüsselableitungsparameter Schlüsseltyp-Identifikation und Schlüsseltyp-Anlernzähler umfasst.

Dabei ist es weiterhin vorteilhaft, wenn die Vorrichtung so ausgelegt wird, dass sie zur Schlüsselableitung weiterhin einen oder mehrere der Schlüsselableitungsparameter
- Seriennummer des Produkttyps
- Erneuerungsbedürftigkeit eines oder mehrerer Schlüssel
- Identitätszähler
   berücksichtigt.

In einer anderen Variante betrifft die Erfindung ein Fahrzeug, das mit mindestens einer Recheneinheit ausgestattet ist, wobei die Recheneinheit einen geschützten Speicherbereich in einem Speicher aufweist, in dem mindestens ein kryptografischer Schlüssel abgespeichert ist. Zusätzlich ist es vorteilhaft, wenn die Recheneinheit einen anderen Speicherbereich aufweist, in dem wenigstens eine Masterschlüsselreferenz und ein Schlüsselableitungsparametersatz mit wenigstens dem Schlüsselableitungsparameter Identitätszählerstand bzgl. eines Zustandes der Schlüssel des Fahrzeuges abgespeichert ist.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Fig. 1: die prinzipielle Systemarchitektur für die mobilfunk-gestützte Kommunikation im Fahrzeug;
- Fig. 2: ein Blockschaltbild der Bordelektronik eines Fahrzeuges;
- Fig. 3: das Prinzip der Schlüsselableitung von einem Masterschlüssel bei dem Vorgang einer Schlüsselerneuerung für bestimmte Steuergeräte eines Fahrzeuges;
- Fig. 4: eine schematische Darstellung der Daten-Container, die von einem Backend-Server runtergeladen werden, um Schlüsselerneuerungen in ein Fahrzeug einzubringen; und
- Fig. 5: ein Format einer Anforderungsnachricht, die zur Beantragung neuer Schlüssel bei Austausch eines Steuergerätes seitens des Fahrzeuges zu dem Backend-Server gesendet wird.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

Mit dem Einzug moderner Kommunikationstechnik in die Fahrzeuge der Zukunft entwickeln sich die Fahrzeuge immer mehr zu Kommunikationszentralen, von denen aus vielerlei Arten von Dienstleistungen in Anspruch genommen werden können. Dabei werden in die Fahrzeuge auch immer mehr Zusatzdienste integriert, die von dem Hersteller des Fahrzeuges angeboten werden. Beispiele solcher Dienste sind Navigationsdienste, Sicherheitsdienste, wie Unfallwarnmeldungen und Pannenruf, Fernbedienungsdienste für die Programmierung der Aufladevorgänge von Elektrofahrzeugen, Klimatisierung, Abruf von Fahrzeugdaten und des Standort des Fahrzeuges usw. Auch die Werkstätten können eingebunden werden und Fahrzeuge in die Werkstatt rufen, bspw. bei Rückrufaktionen. Auch gibt es mittlerweile die Möglichkeit, einige Funktionen des Fahrzeuges, die per Software realisiert werden, von Zeit zu Zeit zu verbessern, was durch Software-Update geschehen kann. Derzeit findet das oft in der Werkstatt statt. Dies wird aber zukünftig vermehrt auch online durchgeführt, also über einen Download von einem Server im Internet, was auch als Download Over the Air (OTA) bezeichnet wird. Derartige Dienste, wie auch der Vorgang des Software-Updates, müssen mit Schlüsseln abgesichert werden. Kryptographische Schlüssel werden dabei nicht nur für die Vorgänge bzgl. des Zugangs zu Online-Diensten eingesetzt, sondern auch zu dem Zweck des Diebstahlschutzes (Zugang zum Fahrzeug) und zur Freischaltung weiterer Funktionen, die bereits in Steuergeräten des Fahrzeuges angelegt sind, dem Zugang zu Diagnose- und Unfalldaten, usw.

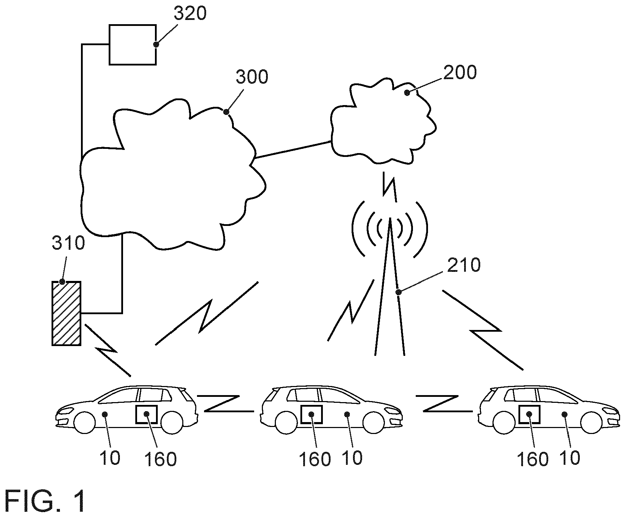

Fig. 1 zeigt zunächst die Systemarchitektur für die Fahrzeugkommunikation mittels Mobilfunk. Die Bezugszahl 10 bezeichnet ein Fahrzeug. Das dargestellte Fahrzeug ist als Personenkraftwagen ausgeführt. Dies soll nicht einschränkend gemeint sein, es kann sich um einen beliebigen Fahrzeugtyp handeln. Beispiele für andere Fahrzeugtypen sind: Nutzfahrzeuge, insbesondere Lastkraftwagen, Busse, Motorräder, Fahrräder, Roller, Campingfahrzeuge, landwirtschaftliche Maschinen, Baumaschinen, Schienenfahrzeuge usw. Die Verwendung der Erfindung wäre generell in Landfahrzeugen, Schienenfahrzeugen, Wasserfahrzeugen und Flugzeugen inklusive Robotern und Drohnen möglich. Das Fahrzeug 10 ist mit einem On-Board-Kommunikationsmodul 160 mit entsprechender Antenneneinheit ausgestattet, so dass es an den verschiedenen Arten der Fahrzeugkommunikation Vehicle-to-Vehicle (V2V) und Vehicle-to-Everything (V2X) teilnehmen kann. Fig. 1 zeigt, dass das Fahrzeug 10 mit der Mobilfunk-Basisstation 210 eines Mobilfunk-Anbieters kommunizieren kann.

Eine solche Basisstation 210 kann eine eNodeB-Basisstation eines LTE-Mobilfunkanbieters (Long Term Evolution) sein. Die Basisstation 210 und die entsprechende Ausrüstung ist Teil eines Mobilfunk-Kommunikationsnetzwerks mit einer Vielzahl von Mobilfunkzellen, wobei jede Zelle von einer Basisstation 210 bedient wird.

Die Basisstation 210 ist nahe einer Hauptstraße positioniert, auf der die Fahrzeuge 10 fahren. In der Terminologie von LTE entspricht ein mobiles Endgerät einer Benutzerausrüstung UE, die es einem Benutzer ermöglicht, auf Netzwerkdienste zuzugreifen, wobei er sich über die Funkschnittstelle mit dem UTRAN oder dem Evolved-UTRAN verbindet. Typischerweise entspricht eine solche Benutzerausrüstung einem Smartphone. Solche mobilen Endgeräte werden von den Passagieren in den Fahrzeugen 10 verwendet. Zusätzlich sind die Fahrzeuge 10 jeweils mit einem On-Board-Kommunikationsmodul 160 ausgestattet. Dieses On-Board-Kommunikationsmodul 160 entspricht z.B. einem LTE-Kommunikationsmodul, mit dem das Fahrzeug 10 mobile Daten empfangen kann (Downlink) und solche Daten in Aufwärtsrichtung senden kann (Uplink). Dieses On-Board-Kommunikationsmodul 160 kann ferner mit einem WLAN p-Modul ausgestattet sein, um an einem Ad-hoc-V2X-Kommunikationsmodus teilnehmen zu können.

In Bezug auf das LTE-Mobilfunk-Kommunikationssystem besteht das Evolved UMTS Terrestrial Radio Access-Netzwerk E-UTRAN von LTE aus mehreren eNodeBs, die die E-UTRA-Benutzerebene (PDCP / RLC / MAC / PHY) und die Steuerebene (RRC) bereitstellen. Die eNodeBs sind mittels der sogenannten X2-Schnittstelle miteinander verbunden. Die eNodeBs sind auch über die sogenannte S1-Schnittstelle mit dem EPC (Evolved Packet Core) 200 verbunden.

Aus dieser allgemeinen Architektur zeigt Fig. 1, dass die Basisstation 210 über die S1-Schnittstelle mit dem EPC 200 verbunden ist und der EPC 200 mit dem Internet 300 verbunden ist. Ein Backend-Server 320, an den die Fahrzeuge 10 Nachrichten senden können und von diesem empfangen können, ist ebenfalls mit dem Internet 300 verbunden. Schließlich ist auch eine Straßeninfrastrukturstation 310 gezeigt. Diese kann beispielsweise durch eine straßenseitige Einheit, die im Fachjargon oft als Road Side Unit RSU 310 bezeichnet wird, veranschaulicht werden. Zur Vereinfachung der Implementierung wird davon ausgegangen, dass allen Komponenten eine Internetadresse zugewiesen wurde, typischerweise in Form einer IPv6-Adresse, so dass die Pakete, die Nachrichten zwischen den Komponenten transportieren, entsprechend geroutet werden können. Die erwähnten verschiedenen Schnittstellen sind standardisiert. Es wird diesbezüglich auf die entsprechenden LTE Spezifikationen verwiesen, die veröffentlicht sind.

Bzgl. des noch näher zu beschreibenden Schlüsselmanagementsystems besteht das Grundprinzip darin, dass von Seiten des Fahrzeuges ein neuer Schlüsselsatz bei dem Backend-Server 320 angefordert wird, wobei das Fahrzeug keine eigentlichen Schlüsseldaten zum Backend-Server sendet 320, sondern der jeweilige Backend-Server 320 nur eine Referenz zu einem Masterschlüssel mit Zusatzinformationen über den oder die Schlüsselzustände geliefert bekommt, aus der er den oder die eigentlichen Schlüssel ableiten kann. Die im Backend neu generierten Schlüssel werden an das Fahrzeug übertragen und sicher in das Fahrzeug 10 eingebracht. Dies geschieht meistens in einer Werkstattumgebung. Dabei kann ein Computer (Diagnosecomputer) an das Fahrzeug 10 angeschlossen sein, über den die Bedienung des Schlüsselaustauschvorgangs erfolgt. Dabei kann der Backend-Server 320 in einem Rechenzentrum des Fahrzeugherstellers positioniert sein oder auch bei einem Krypto-Dienstleister, der von dem Hersteller zu diesem Zweck beauftragt wird.

Bei der Produktion des Fahrzeuges 10 werden alle Schlüssel zusammengestellt und in das Fahrzeug 10 einprogrammiert, die es benötigt, um auf die verschiedenen Dienstleistungen, zu denen es berechtigt ist, zugreifen zu können.

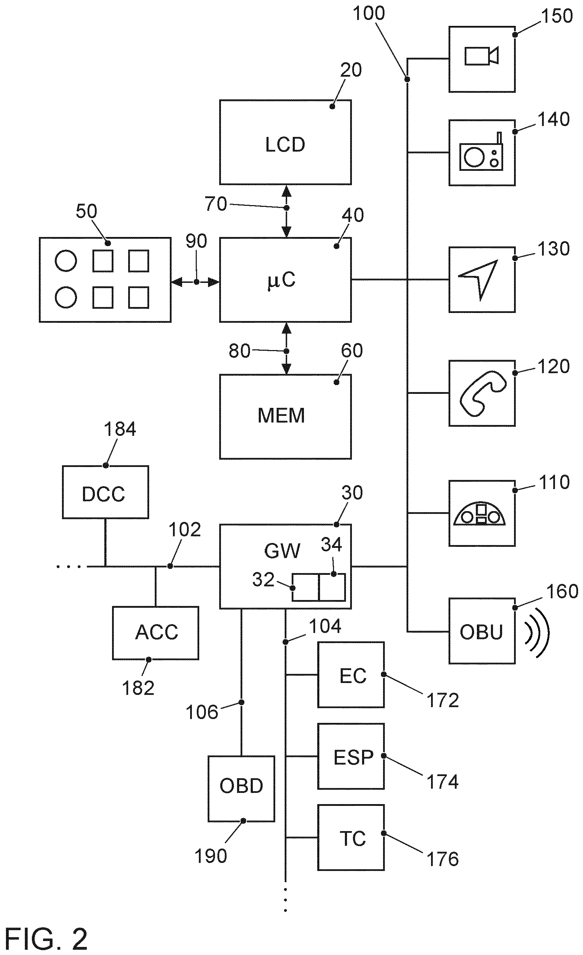

Zunächst ist noch ein Beispiel der Bordelektronik eines Fahrzeuges in Fig. 2 dargestellt. Dazu gehört ein Infotainmentsystem. Ein Infotainmentsystem bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Das Infotainmentsystem umfasst die Komponenten, die an die Busleitung 100 angeschlossen sind. Dazu gehört eine Recheneinrichtung 40, die berührungsempfindliche Anzeigeeinheit 20, eine Eingabeeinheit 50 und ein Speicher 60. Die Anzeigeeinheit 20 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 20 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 20 Steuerdaten zum Ansteuern der Anzeigefläche des Touchscreens 20 von der Recheneinrichtung 40. Über die Datenleitung 70 werden auch Steuerdaten der eingegebenen Befehle von dem Touchscreen 20 zu der Recheneinrichtung 40 übertragen. Zu der Eingabeeinheit 50 gehören die schon erwähnten Bedienelemente wie Tasten, Drehregler, Schieberegler oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für die möglichen Einblendungen von Informationen auf der Anzeigeeinheit 20.

Die weiteren Teile des Infotainmentsystems Kamera 150, Radio 140, Navigationsgerät 130, Telefon 120 und Kombiinstrument 110 sind über den Datenbus 100 mit der Vorrichtung zur Bedienung des Infotainmentsystems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie IEEE 802.03cg in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbilder/s entspricht. Alternativ kann eine Spezialkamera eingesetzt werden, die mehr Bilder/s aufnimmt, um die Genauigkeit der Objekterkennung bei sich schneller bewegenden Objekten zu erhöhen. Es können mehrere Kameras zur Umfeldbeobachtung eingesetzt werden. Daneben könnten auch RADAR- oder LIDAR-Systeme, entsprechend Radio Detection and Ranging und Light Detection and Ranging ergänzend oder alternativ eingesetzt werden, um die Umfeldbeobachtung durchzuführen oder zu erweitern. Für die drahtlose Kommunikation nach innen und außen ist das Fahrzeug 10 mit einem Kommunikationsmodul 160 ausgestattet. Dieses Modul wird oft auch als On-Board Unit bezeichnet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation etc.

Der Kommunikationsbus 100 des Infotainmentsystems ist mit einem Gateway 30 verbunden. Daran angeschlossen sind auch die anderen Teile der Kfz-Elektronik. Zum Einen der Kommunikationsbus 104 des Antriebstrangs, der typischerweise in Form des CAN-Bus realisiert wird. Als Beispiele sind die Steuergeräte des Antriebstrangs Motorsteuergerät 172, ESP-Steuergerät 174 und Getriebesteuergerät 176 genannt und gezeigt. Weiter der Kommunikationsbus 102 für Fahrerassistenzsysteme, der in Form des FlexRay-Busses ausgebildet sein kann. Dabei sind zwei Fahrerassistenzsysteme dargestellt: ein Fahrerassistenzsystem 182 zur automatischen Abstandsregelung ACC entsprechend Adaptive Cruise Control, und ein Steuergerät 184 für die automatische Einstellung des Fahrwerkes. Weiterhin ist noch ein Kommunikationsbus 106 an das Gateway 30 angeschlossen. Dieser verbindet das Gateway 30 mit einer On-Board Diagnoseschnittstelle 190. Die Aufgabe des Gateway 30 besteht darin, die Formatumwandlungen für die verschiedenen Kommunikationssysteme 100, 102, 104, 106 zu machen, sodass untereinander Daten ausgetaucht werden können.

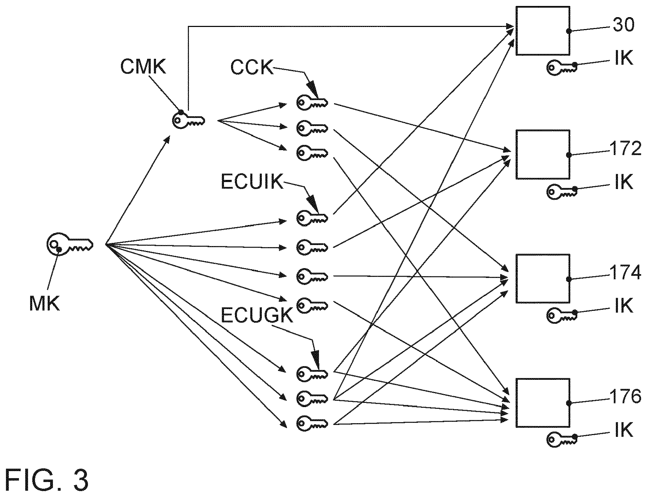

Die Fig. 3 zeigt noch das allgemeine Prinzip der Schlüsselableitung eines Satzes von kryptographischen Schlüsseln für das Fahrzeug 10 aus einem Masterschlüssel MK. Dabei können zwei Arten von Schlüsseln abgeleitet werden. Schlüssel, die individuell pro Steuergerät sind, und Schlüssel, die innerhalb eines Fahrzeugs an mehrere Steuergeräte verteilt werden. Die abgeleiteten Schlüssel können auch für andere Komponenten eines Fahrzeugs abgeleitet werden, wie zum Beispiel andere Recheneinheiten und andere Komponenten des Infotainmentsystems.

Dargestellt sind mehrere Schlüssel, die den Steuergeräten 30, 172, 174, 176 des Fahrzeugs zugewiesen werden beziehungsweise zugewiesen sind. Die Fig. 2 ist vereinfacht dargestellt. Bei einer praktischen Realisierung würden auch die weiteren Steuergeräte 182, 184 und Komponenten des Infotainmentsystems mit eigenen Schlüsseln versorgt werden. Das Gateway 30 dient in diesem Beispiel als Mastersteuergerät für die Kommunikation und/oder Verschlüsselung. Es weist einen Speicher auf mit zwei verschiedenen Speicherbereichen. In dem besonders geschützten Speicherbereich 32 sind die kryptographischen Schlüssel abgespeichert, die das Gateway benötigt. In dem anderen Speicherbereich 34 wird eine Masterschlüsselreferenz (MKR) und ein Schlüsselableitungsparametersatz (MKR, IDC, KID, KIDUC, KIDUR, VIN, ECUIN) abgespeichert. Die dort abgelegten Daten können zu dem Backend-Server 320 übertragen werden, wie es nachfolgend noch näher erläutert wird. Das Mastersteuergerät kann als Fahrzeug-interne Kryptographieeinheit agieren für die Signierung von symmetrischen Schlüsseln für andere Steuergeräte des Fahrzeugs oder als Zeitmaster für einen CAN Bus 104. Es ist ebenso möglich, dass jedes Steuergerät seine eigene Steuergerätinterne Kryptographie-Einheit enthält.

Jedes Steuergerät beinhaltet einen initialen Schlüssel IK, der durch den Lieferanten beziehungsweise Hersteller des Steuergeräts eingebracht wird. Der initiale Schlüssel IK dient zur Verschlüsselung und Signierung des Download-Link-Containers bei der Erstbedatung des Steuergeräts. Er kann beim Bedatungsprozess durch einen Schlüssel speziell für dieses Steuergerät ersetzt werden. Dieser kann dann zur Verschlüsselung und Signierung aller weiteren Schlüsseldatensätze und für sonstige administrative Funktionen, die das Steuergerät hinsichtlich des Vertrauenskreises betreffen, dienen.

Die Bedatung durch den Lieferanten erfolgt in einer geschützten Umgebung, so dass ein Bekanntwerden der initialen Schlüssel IK verhindert wird.

Aus Sicht des Fahrzeugherstellers wird zunächst ein Masterschlüssel MK erzeugt. Der Masterschlüssel MK wird in einer Datenbank des Backend-Servers 320 des Herstellers abgelegt. Die Ableitung der anderen Schlüssel für alle Fahrzeuge oder eine Gruppe von Fahrzeugen erfolgt aus diesem Masterschlüssel MK. Es können Masterschlüssel für verschiedene Wirtschaftsbereiche anhand von einer oder mehreren der Kriterien Fahrzeugmarke, Fahrzeugmodell, Herstellungsjahr und Vertriebsland oder Vertriebsregion vergeben werden.

Von dem Masterschlüssel MK wird ein Masterkommunikationsschlüssel CMK abgeleitet. Er dient dazu, für die Kommunikation mit den verschiedenen Steuergeräten und anderen Komponenten des Fahrzeuges einen gemeinsamen Schlüssel zu verwenden, so dass das Mastersteuergerät 30 geschützt mit den anderen Komponenten kommunizieren kann.

Für die Kommunikationen von den Steuergeräten untereinander können aus dem Masterkommunikationsschlüssel CMK weitere Kommunikationsschlüssel CCK für die Steuergeräte 30, 172, 174, 176 abgeleitet werden und an die Steuergeräte 30, 172, 174, 176 verteilt werden.

Aus dem Masterschlüssel MK werden weitere individuelle Schlüssel für die Steuergeräte 30, 172, 174, 176 erzeugt. Ein solcher Schlüssel ECUIK ist im Fahrzeug ausschließlich diesem einen Steuergerät bekannt. Es können auch für einzelne Funktionen der Steuergeräte individuelle Schlüssel abgeleitet werden. Jede Funktion, die einen solchen Schlüssel benötigt, erhält ihren eigenen Schlüssel ECUIK. Die Schlüssel werden vorzugsweise mit einer Länge von 256 Bit erstellt, so dass sie auch zukünftig noch als sicher gelten. Für den Verschlüsselungsalgorithmus wie auch den Entschlüsselungsalgorithmus wird das AES-Verfahren, entsprechend Advanced Encryption Standard eingesetzt. Der Fachmann kennt das Verfahren aus einschlägigen Veröffentlichungen, außerdem ist das AES-Verfahren standardisiert.

Aus dem Masterschlüssel MK werden weiterhin Schlüssel für steuergeräteübergreifende Funktionen ECUGK generiert. Diese Schlüssel ECUGK werden aus der Fahrzeugidentifikationsnummer VIN oder FIN des Vertrauenskreises abgeleitet. Im Gegensatz zu den individuellen Schlüsseln für Steuergeräte ECUIK wird ein steuergeräteübergreifender Schlüssel ECUGK an mehrere Steuergeräte verteilt und ermöglicht somit verteilten Funktionen Zugriff auf das gleiche Schlüsselmaterial. Der steuergeräteübergreifende Schlüssel ECUGK kann somit beispielsweise für funktionsbezogene geschützte Kommunikation innerhalb des Fahrzeugs verwendet werden. Die verschiedenen Schlüsselsätze für die Steuergeräte können in dem Backend-Server 320 in Form von Download-Containern zur Verfügung gestellt werden. Das Fahrzeug wird diese Download-Container über eine sichere Verbindung ggfs. noch zusätzlich verschlüsselt herunterladen. Dieser Vorgang wird später noch genauer gezeigt.

Alle Bedatungsvorgänge werden im Backend-Server 320 verbucht und sind somit nachvollziehbar. Das Backend hält für jedes Fahrzeug 10 eine Historie der verbauten Teilnehmer vor, welche alle Informationen enthält, um die in einem Teilnehmer enthaltenen Schlüssel erzeugen zu können. Die Bedatungsvorgänge umfassen sowohl die Erstbedatung als auch eine Mehrfachbedatung, das heißt eine erneute Bedatung eines bereits bedateten Fahrzeuges. Eine Mehrfachbedatung ist zum Beispiel notwendig, falls ein bereits bedatetes Steuergerät ausgetauscht werden muss und nach Reparatur in ein anderes Fahrzeug eingebaut werden soll. Ein anderer typischer Anwendungsfall betrifft den Verkauf des Fahrzeuges in eine andere Vertriebsregion, die andere Vorschriften für die Vergabe der Schlüssel hat. Der Schlüsselableitungsmodell wird als bekannt vorausgesetzt. Es wird auf die bereits bei der Einleitung beschriebenen Lösungen des Standes der Technik Bezug genommen.

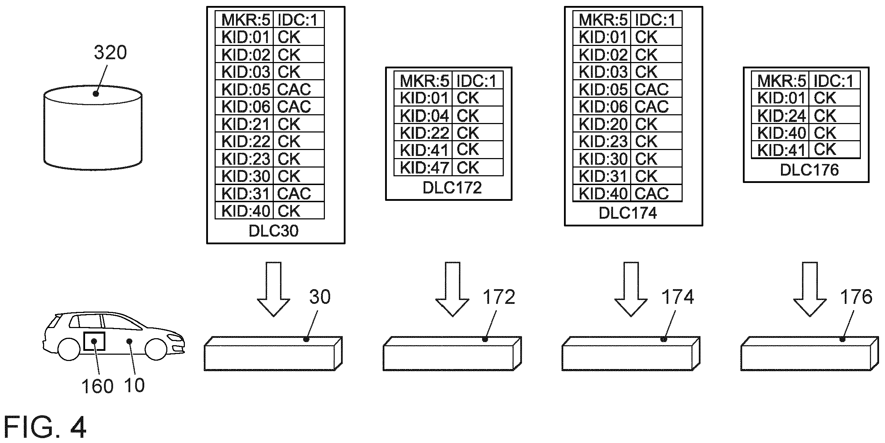

Der Vorgang einer Schlüsselerneuerung der Steuergeräte 30, 172, 174, 176 ist in der Fig. 4 genauer gezeigt. Darin sind die Download-Link-Container (DLC) für die Steuergeräte 30, 172, 174 und 176 gezeigt. Wie beschrieben, werden alle Schlüssel bei dem Backend-Server 320 von dem zugehörigen Masterschlüssel MK abgeleitet. Dieser Masterschlüssel MK wird auch bei Erstbedatung nicht im Fahrzeug 10 abgespeichert. Er wird nur den Backend-Servern 320 des Vertrauenskreises zur Verfügung gestellt und dort sicher gespeichert. Es wird aber eine Masterschlüsselreferenz MKR vergeben, die in den Download-Link-Containern für die Steuergeräte 30, 172, 174, 176 eingetragen wird. Zusätzlich wird auch ein Identitätszählerstand IDC eingetragen, der angibt, wie oft alle Schlüssel des Steuergerätes neu bedatet wurden. Darunter sind bei den Download-Link-Containern die für das jeweilige Steuergerät vorgesehenen abgeleiteten kryptographischen Schlüssel mit ihren Schlüsseltypidentifikationen KID angegeben. Bei dem Mastersteuergerät 30 sind die Schlüssel mit den Schlüsseltypidentifikationen 01, 02, 03, 05, 06, 21, 22, 23, 30, 31, 40 aufgelistet. Die Bedeutung der verschiedenen Schlüsseltypen wird nicht im Einzelnen erläutert. Bei dem Steuergerät 172 werden die Schlüssel der Schlüsseltypen 01, 04, 22, 41, 47 aufgelistet. Bei dem Steuergerät 174 werden die Schlüssel der Schlüsseltypen 01, 02, 03, 05, 06, 20, 23, 30, 31, 40 aufgelistet. Bei dem Steuergerät 176 werden die Schlüssel der Schlüsseltypen 01, 24, 40, 41 aufgelistet. Zusätzlich werden in den Download-Link-Containern die Anfangswerte verschiedener Schlüsselableitungsparameter aufgelistet.

Das sind die aufgelisteten Schlüsselableitungsparameter im DLC:

| Schlüsselableitungsparameter | |
|---|---|
| Masterschlüsselreferenz | MKR: 5 |
| Identitätszähler | IDC: 1 |
| Schlüsseltypidentifikation | KID |

Die anderen Schlüsselableitungsparameter wie Schlüsseltyp-Anlernzähler und Erneuerungsbedürftigkeit des jeweiligen Schlüssels wurden bereits bei der Erstbedatung abgespeichert und ändern sich bei dem gezeigten Schlüsselerneuerung nicht.

Dabei wird der Schlüsseltyp-Anlernzähler CKLC dafür eingesetzt, einzelne Schlüssel gezielt zu ändern. Die Schlüsseltypen, denen ein Schlüsseltyp-Anlernzähler CKLC zugeordnet ist, können im Laufe der Zeit voneinander abweichende Einträge aufweisen. Durch Erhöhung des Schlüsseltyp-Anlernzählers für einen Schlüsseltyp eines Steuergerätes wird der "gleiche" Schlüssel auch in den entsprechenden anderen Steuergeräten des Fahrzeuges geändert und dessen Schlüsseltyp-Anlernzähler entsprechend um Eins erhöht. Mit dem Schlüsselableitungsparameter Erneuerungsbedürftigkeit CKUR werden bei Tausch eines Steuergeräts eines Fahrzeuges alle Schlüssel der als erneuerungsbedürftig gekennzeichneten Schlüssel erneuert, die auch in dem ausgetauschten Steuergerät erneuert wurden, ausgetauscht und deren Schlüsseltyp-Anlernzähler erhöht sich um Eins. Damit ändert sich derselbe Schlüssel auch in den anderen Steuergeräten. Damit werden invasive Angriffsszenarien ausgehebelt, bei denen die Hardware von Steuergeräten zerstört wird, um die Schlüssel auszulesen, da die Schlüssel hinterher wertlos werden, sobald das zerstörte Steuergerät ersetzt wird. Bei dem neu eingesetzten Steuergerät wird der Schlüsseltyp-Anlernzähler bei den als erneuerungsbedürftig gekennzeichneten Schlüssel erhöht und dadurch werden auch die entsprechenden Schlüssel der in dem Fahrzeug verbleibenden Steuergeräte ersetzt, so dass die alten Schlüssel des zerstörten Steuergerätes wertlos werden.

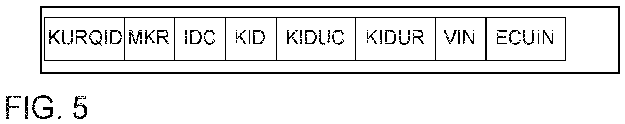

Die Fig. 5 zeigt noch das Nachrichtenformat für eine Nachricht, die das Fahrzeug 10 erzeugt und über das Kommunikationsmodul 160 an den Backend-Server 320 sendet, um eine Schlüsselerneuerung zu beantragen. Diese Schlüsselerneuerungs-Anforderungsnachricht beinhaltet eine Identifikation KURQID zur Erkennung der Schlüsselerneuerungs-Anforderungsnachricht. Danach folgen die verschiedenen Schlüsselableitungsparameter MKR, KID, CKLC, CKUR, VIN, und ECUIN. Dabei haben die Schlüsselableitungsparameter die folgenden Bedeutungen:

| | |
|---|---|
| MKR | Masterschlüsselreferenz |
| IDC | Identitätszähler |
| KID | Schlüsseltypidentifikation |
| CKLC | Schlüsseltyp-Anlernzäher |
| CKUR | Schlüssel-Erneuerungsbedürftigkeit |
| VIN | Fahrzeugidentifikationsnummer |
| ECUIN | Steuergeräteidentifikationsnummern |

Der Vorgang der Schlüsselerneuerung funktioniert so: Das Fahrzeug übermittelt seinen kompletten Zustand, wie in Fig. 5 gezeigt. Dazu zählen auch die Steuergeräteidentifikationsnummern ECUIN. Das Backend ist ja informiert über den Status Quo des Fahrzeugzustandes. Es wertet die übermittelten Informationen aus und entscheidet dann selbst, ob und welche Schlüssel erneuert werden müssen. Z.B. erkennt es an der veränderten Steuergeräteidentifikationsnummer, welches Steuergerät getauscht wurde, und berechnet die nötigen kryptografischen Schlüssel neu.

Der Backend-Server 320 wertet die Einträge der Schlüsselerneuerungs-Anforderungsnachricht aus und erzeugt die angeforderten Schlüssel neu. Es werden die abgeleiteten Schlüssel wieder in Download-Link-Containern bereitgestellt und über eine gesicherte Kommunikation zu dem Fahrzeug 10 übertragen.

Der Bedarf der Erneuerung aller Schlüssel des Fahrzeug kann daran erkannt werden, dass eine Schlüsselerneuerungs-Anforderungsnachricht eingeht, wobei sich der Status nicht verändert hat, also kein Steuergerät ersetzt wurde, etc.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können.

Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise werden das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

### Bezugszeichenliste

- 10: Fahrzeug
- 18: Verwaltungseinheit
- 20: berührungsempfindliche Anzeigeeinheit
- 30: Gateway
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: 1. Datenbus
- 102: 2. Datenbus
- 104: 3. Datenbus
- 106: 4. Datenbus
- 110: Kombiinstrument
- 120: Telefon
- 130: Navigationsgerät
- 140: Radio
- 150: Kamera
- 160: Kommunikationsmodul
- 172: Motorsteuergerät
- 174: ESP-Steuergerät
- 176: Getriebe-Steuergerät
- 182: Abstandsregelungs-Steuergerät
- 184: Fahrwerk-Steuergerät
- 190: On-Board Diagnosestecker
- 200: Evolved Packet Core
- 210: Mobilfunk-Basisstation
- 300: Internet
- 310: Road-Side Unit
- 320: Backend-Server
- CCK: Kommunikationsschlüssel
- CKLC: Schlüsseltyp-Anlernzäher
- CKUR: Schlüssel-Erneuerungsbedürftigkeit
- CMK: Kommunikations-Masterschlüssel
- ECUIK: steuergerät-individueller Schlüssel
- ECUGK: steuergeräteübergreifender Schlüssel
- IK: initialer Schlüssel
- KID: Schlüsseltypidentifikation
- MK: Masterschlüssel
- MKR: Masterschlüsselreferenz

## Patentansprüche

1. Verfahren zur Erzeugung von kryptographischen Schlüsseln nach einem Schlüsselableitungsmodell mit den Schritten:
- Definieren eines Masterschlüssels (MK) für verschiedene Modelle eines Produkttyps eines Herstellers,
- Definieren eines Satzes von Schlüsselableitungsparametern (MKR, IDC, KID, KIDUC, KIDUR, VIN, ECUIN) für das Schlüsselableitungsmodell,
- Erfassen der Schlüsselableitungsparameter (MKR, IDC, KID, KIDUC, KIDUR, VIN, ECUIN) für das Modell, zu dem ein kryptographischer Schlüssel (CCK, ECUIK, ECUGK) abgeleitet werden soll,
- Ableiten eines einzelnen oder eines Satzes kryptographischer Schlüssel (CCK, ECUIK, ECUGK) von dem Masterschlüssel (MKR) nach dem Schlüsselableitungsmodell unter Einbeziehung der Schlüsselableitungsparameter (MKR, IDC, KID, KIDUC, KIDUR, VIN, ECUIN), **dadurch gekennzeichnet, dass**
- der Schritt des Definierens eines Satzes von Schlüsselableitungsparametern (MKR, IDC, KID, KIDUC, KIDUR, VIN, ECUIN) wenigstens die Parameter
- Schlüsseltyp-Identifikation (KID)
- Schlüsseltyp-Anlernzähler (KIDUC)
umfasst.

2. Verfahren nach Anspruch 1, **dadurch gekennzeichnet, dass** der Schritt des Definierens eines Satzes von Schlüsselableitungsparametern (MKR, IDC, KID, KIDUC, KIDUR, VIN, ECUIN) weiterhin einen oder mehrere der Schlüsselableitungsparameter (MKR, IDC, KID, KIDUC, KIDUR, VIN, ECUIN)
- Seriennummer des Produkttyps (VIN)
- Erneuerungsbedürftigkeit (KIDUR) eines oder mehrerer Schlüssel
- Identitätszähler (IDC)
umfasst.

3. Verfahren nach einem der Ansprüche 1 oder 2, **dadurch gekennzeichnet, dass** eine Referenz auf den Masterschlüssel, von dem die kryptographischen Schlüssel (CCK, ECUIK, ECUGK) abgeleitet werden, in dem Produkt abgespeichert wird.

4. Verfahren nach einem der vorhergehenden Ansprüche, **dadurch gekennzeichnet, dass** das Produkt ein Fahrzeug (10) mit einer Anzahl von Steuergeräten (30, 172, 174, 176, 182, 184) ist und als weiterer Schlüsselableitungsparameter eine Steuergeräteidentifikationsnummer (ECUIN) in die Schlüsselableitung eingeht.

5. Verfahren nach Anspruch 4, **dadurch gekennzeichnet, dass** die Masterschlüssel (MK) für die Fahrzeuge (10) eines Herstellers sich nach einem oder mehreren der Kriterien Fahrzeugmarke, Fahrzeugmodell, Herstellungsjahr und Vertriebsland unterscheiden.

6. Verfahren nach einem der Ansprüche 3 bis 5, **dadurch gekennzeichnet, dass** die Schlüsselableitung in einem Backend-Server (320) eines Krypto-Dienstleisters oder des Herstellers erfolgt und der abgeleitete Schlüssel oder der Satz der abgeleiteten Schlüssel zusammen mit der Masterschlüsselreferenz (MKR) und dem Identitätszähler (IDC) dem Produkt per Download-Link-Container (DLC30 - DLC176) zur Verfügung gestellt wird.

7. Verfahren nach Anspruch 6, **dadurch gekennzeichnet, dass** für verschiedene Steuergeräte des Produktes separate Download-Link-Container (DLC30 - DLC176) zur Verfügung gestellt werden.

8. Verfahren nach einem der vorhergehenden Ansprüche, **dadurch gekennzeichnet, dass** die kryptografischen Schlüssel (CCK, ECUIK, ECUGK) fahrzeugindividuell abgeleitet werden mit Hilfe der Fahrzeugidentifikationsnummer (VIN).

9. Verfahren nach einem der Ansprüche 5 bis 8, **dadurch gekennzeichnet, dass** die Eigenschaften des Schlüssels und der Ableitungspfad von dem durch die Schlüsseltyp-Identifikation (KID) bezeichneten Schlüsseltyp bestimmt wird.

10. Vorrichtung zur Erzeugung von kryptographischen Schlüsseln, **dadurch gekennzeichnet, dass** die Vorrichtung ein Schlüsselableitungs-Modul beinhaltet, mit dem eine Ableitung des kryptographischen Schlüssels (CCK, ECUIK, ECUGK) von einem gespeicherten Masterschlüssel (MK), der in einer empfangenen Nachricht durch eine darin angegebene Masterschlüsselreferenz (MKR) ausgewählt wird, erfolgt, wobei die Schlüsselableitung nach einem Schlüsselableitungsmodell erfolgt, bei dem ein Satz von Schlüsselableitungsparametern (MKR, IDC, KID, KIDUC, KIDUR, VIN, ECUIN) eingeht, der wenigstens die Schlüsselableitungsparameter Schlüsseltyp-Identifikation und Schlüsseltyp-Anlernzähler umfasst.

11. Vorrichtung nach Anspruch 10, wobei die Vorrichtung weiter so ausgelegt ist, dass zur Schlüsselableitung einer oder mehrere der Schlüsselableitungsparameter
- Seriennummer des Produkttyps (VIN)
- Erneuerungsbedürftigkeit (KIDUR) eines oder mehrerer Schlüssel
- Identizitätszähler (IDC)
in das Schlüsselableitungsmodell eingeht.

12. Fahrzeug mit mindestens einer Recheneinheit, wobei die Recheneinheit (30) einen geschützten Speicherbereich in einem Speicher (32) aufweist, in dem mindestens ein kryptografischer Schlüssel (CCK, ECUIK, ECUGK) abgespeichert ist, **dadurch gekennzeichnet, dass** die Recheneinheit (30) einen anderen Speicherbereich (34) aufweist, in dem wenigstens eine Masterschlüsselreferenz (MKR) und ein Schlüsselableitungsparametersatz mit wenigstens einem Identitätszählerstand bzgl. eines Zustandes der Schlüssel (CCK, ECUIK, ECUGK) des Fahrzeuges (10) abgespeichert ist.

13. Fahrzeug nach Anspruch 12, wobei in dem Speicherbereich (34) weitere Schlüsselableitungsparameter abgespeichert sind, die wenigstens einen oder mehrere der Schlüsselableitungsparameter
- Seriennummer des Produkttyps (VIN)
- Erneuerungsbedürftigkeit (KIDUR) eines oder mehrerer Schlüssel
- Identizitätszähler (IDC)
umfassen.

14. Fahrzeug nach Anspruch 12 oder 13, wobei das Fahrzeug (10) ein Kommunikationsmodul (160) aufweist, mit dem die in dem Speicherbereich (32) abgespeicherte Masterschlüsselreferenz (MKR) und wenigstens ein abgespeicherter Schlüsselableitungsparametersatz (MKR, IDC, KID, KIDUC, KIDUR, VIN, ECUIN) an eine Vorrichtung zur Erzeugung von kryptographischen Schlüsseln (CCK, ECUIK, ECUGK) nach einem der Ansprüche 10 oder 11 übertragbar ist.
